(19) Europäisches Patentamt
European Patent Office
Office européen des brevets

(11) Publication number: **0 203 817 A1**

(12) **EUROPEAN PATENT APPLICATION**

(21) Application number: 86304096.0

(22) Date of filing: 29.05.86

(51) Int. Cl.⁴: **D 21 H 3/36**, C 08 L 33/26, C 08 L 71/02

(30) Priority: 31.05.85 US 739727

(43) Date of publication of application: 03.12.86 Bulletin 86/49

(84) Designated Contracting States: BE DE FR GB IT NL

(71) Applicant: BETZ EUROPE, INC., 4636 Somerton Road, Trevose Pennsylvania 19047 (US)

(72) Inventor: Gomes, Gilbert Stephen, 7901 Baymeadow Circle East 573, Jacksonville Florida 32216 (US)
Inventor: Schuster, Michael Andrew, 9083 Runnymeade Road, Jacksonville Florida 32217 (US)

(74) Representative: Gore, Peter Manson et al, W.P. THOMPSON & CO. Coopers Building Church Street, Liverpool L1 3AB (GB)

(54) **Polymeric compositions.**

(57) A composition and method for improving filler and fines retention in the manufacture of paper based on a polyalkylene oxide polymer having a molecular weight greater than about 100000 and a polyacrylamide polymer.

EP 0 203 817 A1

DESCRIPTION

POLYMERIC COMPOSITIONS

The present invention relates to compositions and methods using such compositions to improve filler and fines retention in papermaking processes.

Paper may be defined as a matted, felted or fibrous sheet which is formed on a fine wire screen from a liquid, pulp suspension. Usually, the fibers used to form paper are those derived from wood, with a smaller amount of cotton, straw, flax, or other vegetable fibers being utilized.

The preparation of paper in an acceptable form involves the process of pulping, bleaching and refining. Pulp processes may be either mechanical or chemical or combinations of both. In most cases, after the raw fibers are produced as a result of the pulping stage, the pulp is given a bleaching or brightening treatment. Commonly, the last step before papermaking involves beating and fining, which are sometimes referred to as stock preparation. The pulp

fibers as they emerge from the digester and bleach system, if they were run directly over the paper machine, would form paper of low strength and high absorbency because of the stiffness and poor bonding of the fibers. Strength may be developed in the paper by the processes of beating and refining. In many cases, during these beating or refining stages, other additives are added to the paper stock to improve certain desired characteristics. For instance, rosin soap may be added to impart water resistance. Starch or gum material may be added for strength. Fillers are commonly added to increase the opacity, improve printability of the resulting paper, and to provide, in many instances, a more brilliant whiteness. Commonly these fillers are inorganic substances such as talc, clays, calcium carbonate, and titanium dioxide pigments. Also, sizing agents may be added to the pulp before it is formed into a sheet. Such sizing agents commonly comprise wax emulsions or soaps.

During the actual formation of the paper sheet, two types of general machines are commonly used: the Fourdrinier machine and the Cylinder machine. In both types of machines, the sheet is formed on a traveling screen or cylinder, then dewatered under roller pressure, and dried by heated rollers and finished by calendar rolls. The pulp fibers remain on the screen or cylinder while a great portion of the water, containing unretained fiber fines and unretained filler, drains through the screen or cylinder. Accordingly, it is important to retain these fines and filler materials on the paper so that the desired characteristics may be imparted to the resulting paper.

In US-A-3 141 815, the use of polyethylene oxide polymers as a retention aid to improve inorganic filler and fiber fines retention in paper manufacture is disclosed. In US-A- 4 070 236, a retention aid comprising a polyalkylene oxide of molecular weight in excess of one million and a phenol or naphthol-formaldehyde or sulfur resin is added to the pulp. At Column 2 of US-A-4 070 236, it is stated that the retention agent utilized may be employed in conjunction with other retention agents such as "polyamide, amine, polyalkylene, e.g., polyethylene, imine, polyamine and polyacrylic amide types." Of similar import is Japanese Patent Application 45-33361 which discloses the use of nonionic polyacrylamides which may be added to a paper stock solution. The abstract of said Japanese Patent Application further points out that polyethylene oxides having molecular weights of greater than 4.5 million may be used as dispersants.

Other patent specifications which may be of interest include: US-A-4 282 059; US-A-3 332 834; US-A-3 725 195; and US-A-4 305 781.

Despite the approaches taken by the prior art, there remains a need for an inexpensive fines and filler retention aid which is capable of improving paper formation, increasing drainage, and resulting in less suspended solids in the white water discharge to savealls or to mill waste.

In accordance with the invention, it has been found that a polyalkylene oxide polymer used in combination with a high molecular weight polyacrylamide polymer surprisingly increases the retention of solids in paper mill furnishes. The polyalkylene oxide polymer preferably is a polyethylene oxide polymer. Although the molecular weight of the polyethylene oxide polymer may vary from about 100000 to 7000000, a molecular weight of from around 1000000 to 7000000 is preferred. Such polyalkylene oxide materials are well known in the art and their methods of synthesis need not be repeated here.

As to the polyacrylamide polymers which may be used, nonionic, anionic, and cationic copolymers are acceptable. At present, it is preferred to use a cationic polyacrylamide copolymer comprising acrylamide based repeat units and repeat units comprising a polyquaternary ammonium salt of a dialkylaminoalkyl acrylate. Specifically, it is desired to use the dimethylsulphate quaternary amonium salt of diethylaminoethyl acrylate. The polymer preferred is a copolymer of acrylamide and 5-6 mole percent of the dimethylsulphate quaternary ammonium salt of diethylaminoethyl acrylate. Another exemplary cationic polyacrylamide that can be mentioned is a copolymer of acrylamide repeat units and repeat units of the methyl chloride quaternary ammonium salt of dimethylaminoethyl methacrylate.

As to the nonionic polyacrylamides which may be utilized, these may be chosen from polyacrylamide homopolymers and slightly or partially hydrolyzed polyacrylamide homopolymers. One such slightly or partially hydrolyzed polyacrylamide has a degree of hydrolysis of around 3%.

As to the anionic polyacrylamides which may be utilized, a copolymer of acrylic acid and acrylamide is preferred.

All of the above polyacrylamide polymers are commercially available and known in the art. Hence, details of preparation thereof need not be repeated herein.

Compositions in accordance with the invention may comprise from 5 to 95 weight percent of the polyalkylene oxide polymer and from 95 to 5 weight percent of the polyacrylamide polymer. Most preferably, however, the weight ratio of polyalkylene oxide polymer to polyacrylamide polymer is within the range of from about 0.05 to 0.33:1.

Other materials including inert salts such as sodium sulphate, sodium chloride, alum, etc. may be included in the retention compositions of the invention. Presently contemplated compositions include:

| | | Weight Ratio of Components (Based on Weight of Polyacrylamide) |
|---|---|---|
| 1. | Cationic Polyacrylamide | 1 |
| | Polyethylene Oxide Polymer | 0.1 |
| | $NaSO_4$ | 0.57 |
| 2. | Cationic Polyacrylamide | 1 |
| | Polythylene Oxide Polymer | 0.175 |
| | $NaSO_4$ | 0.49 |

| | | |
|---|---|---|
| 3. | Cationic Polyacrylamide | 1 |
| | Polyethylene Oxide Polymer | 0.18 |
| | $NaSO_4$ | 0.82 |
| 4. | Cationic Polyacrylamide | 1 |
| | Polyethylene Oxide Polymer | 0.3 |
| | $NaSO_4$ | 0.7 |

The amount of the combined polymer treatment to be added as a filler and fines retention aid may vary over the range of from 0.041 to 0.820 kg per metric ton (0.1 pound to 2 pounds per dry ton) of paper.

The invention will now be further discribed with reference to the following Examples which demonstrate the efficacy of the polyalkylene oxide polymer - acrylamide based polymer combination in enhancing filler and fines retention, but it is in no manner limited thereto.

A Britt Jar test method was used to generate the data in the following Tables. The Britt Jar is an assembly with a sample chamber, agitator, and screen. Generally, 500 ml of paper mill furnish (head box consistency) is placed in the filtrate sample collected. The solids in the filtrate are determined by filtering through pre-weighed quantitative filter paper. Filtrate solids are the fines that are not retained. Percent fines retention is determined by comparing filtrate fines to the quantity of fines in 100 ml of the original furnish.

% Fines Retention =

$$\frac{\text{Fines in 100 ml Furnish - Fines in 100 ml Filtrate}}{\text{Fines in 100 ml Furnish}} \times 100$$

Data in Table I were obtained from Britt Jar testing of a fine white paper mill headbox stock. The data in Tables II and III were obtained from Britt Jar tests of a standard acid furnish prepared in our laboratory. Britt Jar tests were conducted at 1000 rpm using a 76u screen.

Dosages for polymers were expressed in lbs/T. This dosage is the pounds of active polymer solids per ton of solids in the furnish. At a typical furnish consistency of 0.65%, a polymer dosage a 0.41 kg per metric ton (1 lb/T) corresponds to 3.15 ppm.

Table I

The Effect of Percent PEO on Britt Jar Fines Retention (%).

| Polymer | Dosage kg/metric ton (lbs/T) | | | |
|---|---|---|---|---|
| | 0.164(0.4) | 0.246(0.6) | 0.328(0.8) | 0.410(1.0) |
| 100% Cat PAM | 67.1 | 73.6 | 80.0 | 86.2 |
| 90% Cat PAM 10% PEO | 85.1 | 84.7 | 87.2 | 87.3 |
| 75% Cat PAM 25% PEO | 81.3 | 85.4 | 88.2 | 87.4 |
| 50% Cat PAM 50% PEO | 81.3 | 79.9 | 80.0 | 81.4 |
| 100% PEO | 81.6 | 80.6 | 82.8 | 85.9 |

PEO = Polyethylene oxide, 7 million molecular weight Mill headbox stock

Cat PAM = cationic polyacrylamide (copolymer of acrylamide/dimethylsulfate quaternary ammonium salt of diethylaminoethyl acrylate)

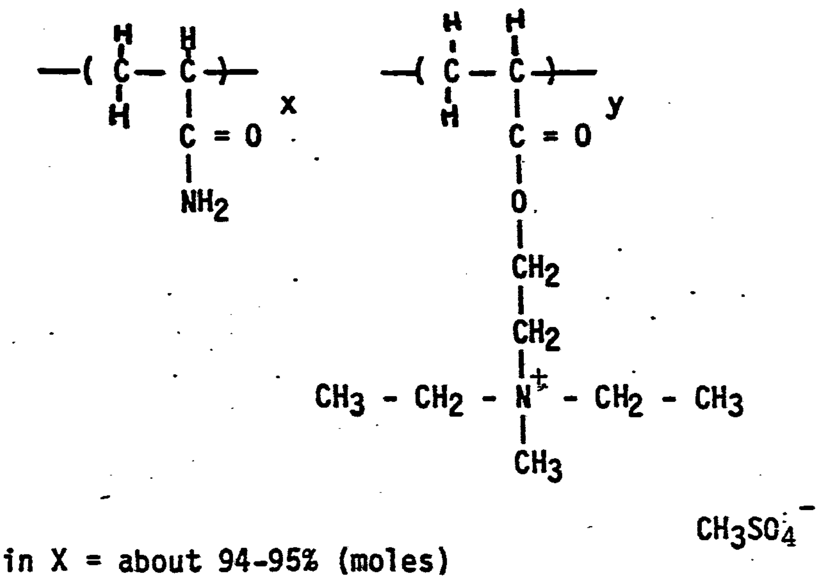

wherein X = about 94-95% (moles)
wherein y = about 6-5% (moles)

Table II

The Effect of Percent PEO Blends with High Molecular Weight Polyacrylamides on Fines Retention (%)

| Polyme  r | % PEO 0 | 5 | 10 | 15 | 20 | 100 |
|---|---|---|---|---|---|---|
| Anionic polyacrylamide | 37.7 | 48.6 | 55.2 | 61.7 | 59.0 | 52.6 |
| Cationic polyacrylamide | 59.4 | 68.1 | 67.8 | 75.2 | 59.4 | 52.6 |
| Nonionic polyacrylamide | 40.8 | 49.1 | 56.3 | 64.1 | 60.5 | 52.6 |

PEO = 4 million molecular weight
Dosage = 0.205 kg per metric ton (0.50 lbs/T)
Standard Acid Furnish

| | |
|---|---|
| 0.50% | 50/50 Blend of bleached kraft softwood/hardwood pulp beaten at a 3.0% consistency to 500 ml ± 25 ml CSF and diluted to 0.5% consistency with D.I. water. |
| 0.50% based on fiber<br>4.10 kg per metric ton<br>(10 lbs/ton) | Rosin Size (Hercules Pexol 200) |
| 0.75% based on fiber<br>6.15 kg per metric ton<br>(15 lbs/ton) | Alum (Fisher $Al_2(SO_4)_3 \cdot 17\ H_2O$ |
| 5.5% based on fiber<br>45.11 kg per metric ton<br>(110 lbs/ton) | $TiO_2$ (Glidden Zopaque RGM) |
| 22% based on fiber<br>180.44 kg per metric ton<br>(440 lbs/ton) | Clay (Huber Hi White) |

Adjust pH to 4.5 with $H_2SO_4$
Final Consistency will be ca. 0.63%

Anionic polyacrylamide = acrylamide/acrylic acid copolymer, MW 8-10 x $10^6$

Cationic polyacrylamide = same as in Table I.

Nonionic polyacrylamide = partially hydrolyzed acrylamide homopolymer (hydrolysis % 3%)

Table III

The Effect of Molecular Weight of PEO in Blends with Cationic Polyacrylamide on Fines Retention.

| | Dosage kg per metric ton (lbs/T) | | | |
|---|---|---|---|---|
| Polymer | 0.164(0.4) | 0.246(0.6) | 0.328(0.8) | 0.410(1.0) |
| Cationic PAM | 75.7 | 85.0 | 90.6 | 90.8 |
| <u>90% PAM 10% PEO</u> | | | | |
| PEO = 7 $M^2$ MW | 85.9 | 91.2 | 92.7 | 91.3 |
| PEO = 4 $M^2$ MW | 90.3 | 90.3 | 90.7 | 92.1 |
| PEO = 2 $M^2$ MW | 84.7 | 92.7 | 96.2 | 93.0 |
| PEO = 1 $M^2$ MW | 81.6 | 85.1 | 91.6 | 94.9 |
| PEO = 0.4 $M^2$ MW | 85.9 | 91.7 | 91.8 | 97.0 |

Standard Acid Furnish = same as in Table II
Cationic PAM is the same as in Tables 1 and II

**Table IV**

Fine White Paper-Bond Grade

| Polymer | Dosage kg per metric ton (lbs/T) 0.082(0.2) | 0.164(0.4) | 0.246(0.6) | 0.328(0.8) |
|---|---|---|---|---|
| 100% Cat PAM | 72.3 | 68.13 | 80.9 | 86.6 |
| 90% Cat PAM 10% PEO | 72.7 | 79.1 | 85.3 | 83.9 |
| 85% Cat PAM 15% PEO | 65.7 | 83.6 | 86.7 | 82.4 |
| 75% Cat PAM 25% PEO | 72.0 | 80.7 | 85.9 | 85.8 |
| 100% PEO | 58.4 | 67.9 | 66.5 | 54.8 |

Cat PAM same as in Table I
PEO same as in Table I

**Table V**

Fine White Paper

| Polymer | Dosage kg per metric ton (lbs/T) 0.082(0.2) | 0.164(0.4) | 0.246(0.6) | 0.328(0.8) |
|---|---|---|---|---|
| 100% Cat PAM | 58.5 | 62.5 | 65.2 | 68.9 |
| 90% Cat PAM 10% PEO | 60.7 | 61.1 | 65.4 | 67.2 |
| 85% Cat PAM 15% PEO | 60.7 | 65.8 | 70.6 | 71.8 |
| 75% Cat PAM 25% PEO | 58.2 | 62.9 | 68.2 | 70.6 |
| 100% PEO | 42.8 | 44.1 | 55.0 | 56.7 |

Cat PAM same as Table I
PEO same as Table I

Table VI

Bogus Corrugating Medium

| Polymer | Dosage kg per metric ton (lbs/T) | | |
|---|---|---|---|
| | 0.082(0.2) | 0.164(0.4) | 0.246(0.6) |
| 100% Cat PAM | 42.7 | 45.6 | 46.2 |
| 90% Cat PAM 10% PEO | 44.7 | 47.9 | 50.6 |
| 85% Cat PAM 15% PEO | 46.5 | 48.7 | 51.1 |
| 75% Cat PAM 25% PEO | 47.4 | 49.7 | 52.7 |
| 100% PEO | 52.1 | 56.8 | 61.0 |

Cat PAM same as Table I
PEO same as Table I

Table VII

Board - Secondary Fiber

| Polymer | Dosage kg per metric ton (lbs/T) | | |
|---|---|---|---|
| | 0.164(0.4) | 0.328(0.8) | 0.492(1.2) |
| 100% Cat PAM | 19 | 24 | 28 |
| 90% Cat PAM 10% PEO | 24 | 34 | 45 |
| 85% Cat PAM 15% PEO | 28 | 40 | 50 |
| 75% Cat PAM 25% PEO | 30 | 42 | 53 |
| 100% PEO | 23 | 32 | 39 |

Cat PAM same as Table I
PEO same as Table I

## Table VIII

Standard Acid Furnish

| Polymer | Dosage kg per metric ton (lbs/T) 0.082(0.2) | 0.164(0.4) | 0.246(0.6) | 0.328(0.8) | 0.410(1.0) |
|---|---|---|---|---|---|
| 100% Cat PAM | 69.6 | 72.8 | 78.0 | 82.7 | 90.9 |
| 90% Cat PAM 10% PEO | 76.1 | 79.7 | 82.8 | 84.1 | 89.1 |
| 85% Cat PAM 15% PEO | 82.4 | 84.7 | 87.2 | 89.2 | 91.2 |
| 75% Cat PAM 25% PEO | 82.0 | 85.4 | 87.8 | 88.7 | 90.2 |
| 100% PEO | 79.9 | 81.1 | 82.3 | 83.8 | 86.5 |

Cat PAM same as Table I
PEO same as Table I

## Table IX

| Polymer | Alum Dosage kg per metric ton (lbs/T) 4.10 (10) | 6.15 (15) | 8.20 (20) |
|---|---|---|---|
| 0.6 lbs/T | | | |
| 100% Emulsion Cat PAM | 43.3 | 51.1 | 50.1 |
| 90% Emulsion Cat PAM 10% PEO | 48.2 | 57.3 | 57.9 |
| 0.8 lbs/T | | | |
| 100% Emulsion Cat PAM | 55.8 | 59.2 | 53.2 |
| 90% Emulsion Cat PAM 10% PEO | 63.4 | 64.2 | 54.2 |

Emulsion Cat PAM = 92.5/7.5 mole % copolymer of acrylamide/methyl chloride quaternary ammonium salt of dimethylaminoethyl methacrylate.

PEO - $4M^2$ MW

The above Tables indicate that synergistic effects were observed when PEO was blended in different ratios with the various polyacrylamide polymers. The cationic polyacrylamide polymers (see Table II especially) performed the best in these examples and hence are presently preferred for use. Preferably, the weight ratio of polyalkylene oxide polymer : polyacrylamide polymer is within the range of about 0.05 to 0.33:1. Table III indicates that the MW of the PEO component of the combined treatment may vary over a wide range.

During the performance of testing relative to the invention, disappointing results occurred in only two instances. In the first, a paper stock of presently unknown constituency from an upstate New York location was tested. Here, PEO itself did not significantly increase filler and fines retention and the same could be said about the cationic polyacrylamide (same polymer as in Table I) - PEO combination. It is not presently known why this test rendered the noted results.

In the other disappointing test, a synthetic laboratory alkaline papermaking furnish comprising a 50/50 blend of kraft hardwood/softwood pulp, calcium carbonate, and starch at a pH of 7.5 was prepared. Here, once again the PEO by itself did not significantly

increase filler and fines retention. The combined cationic polyacrylamide (same as Table I) - PEO run also failed to show significant improvements.

.....................................................

CLAIMS

1. A composition comprising from 5 to 95 wt. % of a polyalkylene oxide polymer having a molecular weight of greater than about 100000 and 95 to 5 wt. % of a polyacrylamide polymer.

2. A composition comprising a polyalkylene oxide polymer having a molecular weight greater than about 100000 and a polyacrylamide polymer, the weight ratio of polyalkylene oxide polymer to polyacrylamide polymer being within the range of about 0.05 to 0.33:1.

3. A composition according to claim 1 or claim 2 wherein the polyalkylene oxide copolymer comprises polyethylene oxide polymer having a molecular weight of from about 100000 to 7000000.

4. A composition according to claim 3 wherein the polyethylene oxide polymer has a molecular weight of from about 1000000 to 7000000.

5. A composition according to any of claims 1 to 4 wherein the polyacrylamide polymer comprises a nonionic polyacrylamide polymer.

6. A composition according to claim 5 wherein the nonionic polyacrylamide is selected from polyacrylamide homopolymers.

7. A composition according to claim 6 wherein the nonionic polyacrylamide comprises a partially hydrolyzed polyacrylamide homopolymer having a degree of hydrolysis of about 3 wt. %.

8. A composition according to any of claims 1 to 4 wherein the polyacrylamide polymer comprises an anionic polyacrylamide polymer.

9. A composition according to claim 8 wherein the anionic polyacrylamide polymer comprises a copolymer of acrylic acid and acrylamide.

10. A composition according to any of claims 1 to 4 wherein the polyacrylamide polymer comprises a cationic polyacrylamide polymer.

11. A composition according to claim 10 wherein the cationic polyacrylamide comprises a copolymer of acrylamide and a quaternary ammonium salt of a dialkylaminoalkyl acrylate.

12. A composition according to claim 11 wherein the copolymer comprises acrylamide and a quaternary ammonium salt of diethylaminoethyl acrylate.

13. A composition according to claim 12 wherein the copolymer comprises about 5 to 6 mole % of said quaternary ammonium salt of diethylaminoethyl acrylate.

14. A method for improving filler and fines retention in the manufacture of paper comprising adding to the paper stock from about 0.041 to 0.820 kg per metric ton (about 0.1 lbs per dry ton to 2 lbs per dry ton) of paper, a composition comprising from 5 to 95 wt. % of a polyalkylene oxide polymer having a molecular weight of greater than about 100000 and 95 to 5 wt. % of a cationic polyacrylamide polymer.

15. A method for improving filler and fines retention in the manufacture of paper comprising adding to the paper stock from about 0.041 to 0.820 kg per metric ton (about 0.1 to 2 lbs per ton) of dry paper of a composition comprising a polyalkylene oxide polymer having a molecular weight greater than about 100000 and a polyacrylamide polymer, the weight ratio of polyalkylene oxide polymer to polyacrylamide polymer being with the range of about 0.05 to 0.33:1.

16. A method according to claims 14 or 15 wherein the polyalkylene oxide copolymer comprises polyethylene oxide polymer having a molecular weight as defined in claim 3 or 4.

17. A method according to any of claims 14 to 16 wherein the polyacrylamide polymer comprises a nonionic polyacrylamide polymer as defined in any of claims 5 to 7.

18. A process according to any of claims 14 to 16

wherein the polacrylamide polymer comprises an anionic polyacrylamide polymer as defined in claim 8 or 9.

19. A process according to any of claims 14 to 16 wherein the polyacrylamide polymer comprises a cationic polyacrylamide polymer as defined in any of claims 10 to 13.

..........................................................

European Patent Office

# EUROPEAN SEARCH REPORT

0203817

Application number

EP 86 30 4096

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | ABSTRACT BULLETIN OF THE INSTITUTE OF PAPER CHEMISTRY, vol. 53, no. 8, February 1983, page 913,abstract no. 8395, Appleton, Wisconsin, US; I. BOZHKOV et al.: "Two-component polymer systems for increasing filler retention in paper", & Tseluloza Khartiya 12, no. 5: 45-48, 35 (1981)<br>--- | 1,2,8, 15,18 | D 21 H 3/36<br>C 08 L 33/26<br>C 08 L 71/02 |
| X | ABSTRACT BULLETIN OF THE INSTITUTE OF PAPER CHEMISTRY, vol. 53, no. 2, August 1982, page 159, abstract no. 1222, Appleton, Wisconsin, US; I. BOZKOV et al.: "Bicomponent polymer systems for increased filler retention in paper", & Papiripar 25, no. 6: 210-213 (1981)<br>--- | 1,2,15 | |
| | | | TECHNICAL FIELDS SEARCHED (Int. Cl.4) |
| X | DE-A-3 412 535 (KEMIRA)<br>* Claim 5 *<br>--- | 1,15 | C 02 F<br>D 21 D<br>D 21 H |
| X | US-A-3 994 806 (E.G. RAUSCH et al.)<br>* column 2, lines 38-63; column 3, line 20 - column 4, line 65; column 5 *<br>--- -/- | 1,2,10 -13 | |

The present search report has been drawn up for all claims

| Place of search | Date of completion of the search | Examiner |
|---|---|---|
| THE HAGUE | 17-07-1986 | NESTBY K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent Office

# EUROPEAN SEARCH REPORT

0203817

Application number

EP 86 30 4096

| DOCUMENTS CONSIDERED TO BE RELEVANT | | | Page 2 |
|---|---|---|---|
| Category | Citation of document with indication, where appropriate, of relevant passages | Relevant to claim | CLASSIFICATION OF THE APPLICATION (Int. Cl.4) |
| A | TAPPI, vol. 63, no. 6, June 1980, pages 63-66, Atlanta, Georgia, US; C.H. TAY: "Application of polymeric flocculant in newsprint stock systems for fines retention improvement" ----- | | |
| | | | TECHNICAL FIELDS SEARCHED (Int. Cl.4) |
| | | | |

The present search report has been drawn up for all claims

| Place of search | Date of completion of the search | Examiner |
|---|---|---|
| THE HAGUE | 17-07-1986 | NESTBY K. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document